# EUROPEAN PATENT APPLICATION

(11) **EP 1 493 955 A1**
(43) Date of publication of application: **05.01.2005**
(21) Application number: 03745990.6
(22) Date of filing: 09.04.2003
(51) Int. Cl.: F16L 11/04, B32B 1/08, B32B 25/04

(54) **MULTI-LAYER TUBE**

(30) Priority: 09.04.2002 JP 2002107135
(71) Applicant: Mitsuboshi Corporation Limited, Osaka-shi, Osaka 543-0001 (JP)
(72) Inventor: HAYASHI, Kouji, Habikino-shi, Osaka 583-0867 (JP); KITAGAWA, Akinao, Habikino-shi, Osaka 583-0867 (JP)
(74) Representative: Bailey, David Martin
(86) International application number: PCT/JP2003/004534
(87) International publication number: WO 2003/085309

(57) **Abstract**

A multi-layer tube (1) which comprises a tube base material (3) comprising a fluororubber type thermoplastic elastomer composed of a rubber phase and a crystalline phase and having a hardness of HDA 40 to 70 as measured according to JIS K 7215 and a coating layer (2) laminated on the inner surface of the tube base material (3), wherein the coating layer (2) is a blend of the above fluororubber type thermoplastic elastomer with a vinylidene fluoride-hexafluoropropylene-tetrafluoroethylene ternary copolymer and has a hardness of HDA 70 or more and HDD 80 or less as measured according to JIS K 7215.

## Description

### Field of the Invention

This invention relates to a multilayer tube used for transmitting liquid or gas.

### Background Arts

Recent expansion of industries has demanded flexible tubes having excellent property in chemical resistance, oil resistance, solvent resistance and thermal resistance. At the same time, various researches to meet the demand have been conducted. For example, this applicant disclosed a flexible tube made of fluororubber and fluororubber type thermoplastic elastomer in Japanese Unexamined Patent Publication No.H10-052885 and Japanese Unexamined Patent Publication No.2001-19365.

According to the technology disclosed in Japanese Patent Publication No.H02-36365, the fluororubber type thermoplastic elastomer is composed of a crystalline phase and a rubber phase; as the crystalline phase, a vinylidene fluoride-tetrafluoroethylene copolymer or ethylene-tetrafluoroethylene copolymer etc. is used; as the rubber phase, a (vinylidene fluoride)-(hexafluoropropylene)-(tetrafluoroethylene) ternary copolymer etc. is used. The above crystalline phase and the rubber phase have a structure of so-called block copolymerization. In the temperature lower than the melting point of the crystalline phase, the strength of a heated body is exemplified by the crystalline phase which forms a physical bridging point. In the temperature higher than the melting point of the crystalline phase, the crystalline phase melts to become fluid wholly allowing easy heat forming processing such as extrusion molding, injection molding, compression molding etc. and enabling to obtain molded objects of various shape. Stated another way, the fluororubber type thermoplastic elastomer is extremely excellent in mechanical strength and chemical resistance. Further, the fuluororubber type thermoplastic elastomer does not contain additives such as carbon powders, acid accepters, vulcanizing agents allowing only little dissolution, and has excellent in transparency, which make it different from common fuluororubbers.

The fluororubber type thermoplastic elastomer may be cross-linked by irradiating a molded object with ionizing radiation rays without crosslinking agent which are usually added to fluororubbers etc. This processing further improves physical properties such as strength, perpetual deformation resistance to compression, thermal resistance etc. However, the surface of the radiated molded object made of a fluororubber type thermoplastic elastomer has tackiness (property of being sticky mutually or to other objects) which may cause various problems of use.

To cope with these problems, the applicant disclosed a multi-layer tube comprising a base tube made of a fluororubber type thermoplastic elastomer and a non-adhesive layer made of fluoroplastic having low tackiness in Japanese Unexamined Patent Publication No.2001-193659. However, since the above non-adhesive layer is harder than the base tube, the thick non-adhesive layer is subject to loss of the whole flexibility. Inversely the thin non-adhesive layer is subject to expansion of the tube when high pressure is applied in transmission of liquid or gas, and further it is subject to wrinkling due to the low elasticity of the non-adhesive layer.

Additionally, the applicant disclosed a copolymer made by heating and kneading composed of a fluororubber type thermoplastic elastomer and a fluoroplastic in Japanese Unexamined Patent Publication No.H11-199739. However, this compound material also does not satisfy the pressure resistance and the flexibility. It is technically incompatible to keep the property of conventional tubes and to make the tube pressure-resistant and flexible wholly. The tubes having low tackiness together with pressure resistance and flexibility are demanded in the field of tubes such as those used in tube pumps, those used in pinch valves, those used in transmission of liquid, gas, or devices such as printers, plotters, dispensers etc. having movable parts.

This invention is directed to provide a multi-layer tube having lower tackiness in the inner surface of the tube and wholly having pressure resistance against the inner pressure in transmission of liquid, gas, while keeping larger flexibility, chemical resistance compared with conventional multi-layer tubes.

### Disclosure of invention

The multi-layer tube of this invention comprises a base tube made of a fluororubber type thermoplastic elastomer composed of a rubber phase and a crystalline phase, having a hardness of HDA 40 or more and HDA 70 or less as measured according to JIS K 7215, and a coating layer laminated on the inner surface or the outer surface of the base tube, wherein the coating layer is a blend of the above fluororubber type thermoplastic elastomer with a (vinylidene fluoride)-(hexafluoropropylene)-(tetrafluoroethylene) ternary copolymer having a hardness of HDA 70 or more and HDD 80 or less as measured according to JIS K 7215.

The second aspect of this invention comprises a base tube made of a fluororubber type thermoplastic elastomer composed of a rubber phase and a crystalline phase, and a coating layer laminated on the inner surface or the outer surface of the base tube, wherein the coating layer is a blend of the fluororubber type thermoplastic elastomer with a ethylene-tetrafluoroethylene copolymer (ETFE) or poly(vinylidene fluoride) (PVDF).

The third aspect of this invention comprises a base tube made of a fluororubber type thermoplastic elastomer composed of a rubber phase and a crystalline phase, and a coating layer laminated on the inner surface or the outer surface of the base tube, wherein the coating layer is made of an ethylene-tetrafluoroethylene copolymer (ETFE) or a poly(vinylidene fluoride) (PVDF).

In the second and third aspect, the hardness of the base tube is preferable to be HDA 40 or more and HDA 70 or less as measured according to JIS K 7215, and the hardness of the coating material is preferable to be HDA 70 or more and HDD 80 or less as measured according to JIS K 7215.

The forth aspect of this invention comprises a base tube and a coating layer laminated on the inner surface of the base tube, wherein both materials of the base tube and the coating layers are made of a blend of a fluororubber type thermoplastic elastomer (A) composed of copolymer of a rubber phase and a crystalline phase having a hardness of HDA 40 or more and HDA 70 or less as measured according to JIS K 7215, with a non-adhesive fluoroplastic (B) having a hardness of HDA 70 or more and HDD 80 or less as measured according to JIS K 7215, and the weight percent of the ternary copolymer(B) of the base tube is less than that of the coating layer.

In the multi-layer tube of the first, second, and third aspect, the non-adhesive fluoroplastic is preferable to be laminated on the side whose surface is not laminated with the coating layer of the base tube. Further, it is preferable that the blend of the fluororubber type thermoplastic elastomer composed of a rubber phase and a crystallin phase having a hardness of HDA 40 or more and HDA 70 or less as measured according to JIS K 7215 with the (vinylidene fluoride)-(hexafluoropropylene)-(tetrafluoroethylene) ternary copolymer having a hardness of HDA 70 or more and HDD 80 or less as measured according to JIS K 7215 is to be laminated on the side whose surface is not laminated with the coating layer of the base tube.

In any of the multi-layer tube described above, the blend is preferable to contain less than 80 weight percent of the fluororubber type thermoplastic elastomer. Further, the rubber phase of the fluororubber type thermoplastic elastomer is preferable to be composed of the (vinylidene fluoride)-(hexafluoropropylene)-(tetrafluoroethylene) ternary copolymer; and the thickness of the coating layer is preferable to be 0.5∼70% of the thickness of the base tube.

The above hardness is the value as measured according to JIS K 7215(1986) plastic durometer hardness measuring method. The durometer can be measured using a meter manufactured by KOUBUNSHI KEIKI CO,LTD. in A hardness(HDA) and D hardness(HDD) by placing a specimen on the durometer holding table. As the specimen, for example, a four-ply press sheet 2mm thick is used.

In the multi-layer tube of this invention, adhesion between the two layer is so high that no peeling or loosening occurs between the layers even in a severe condition, because it contains a fluororubber type thermoplastic elastomer both in the base tube and the coating layer.

And the tackiness of the tube are suppressed, because the coating layer is a blend of a fluororubber type thermoplastic elastomer with and a (vinylidene fluoride)-(hexafluoropropylene)-(tetrafluoroethylene) ternary copolymer which is a non-adhesive fluoroplastic. Particularly in the case that the coating layer is laid on the inner surface of the tube, the tackiness of the tube inside is suppressed to provide excellent heat resistance, oil resistance, and chemical resistance against fluid that is transmitted. Further, the blend has high elasticity, has high durability against bending etc. and is difficulty to be wrinkled. In other words, the combination with the base tube made of a fluororubber type thermoplastic elastomer allows to maintain flexibility, pressure-resistance, durability which are required to tubes used for transmitting liquid or gas. In the case that the coating layer is laid on the outer surface of the tube, dust, garbage etc. are difficult to stick to the surface, and the multi-layer tube itself is prevented from sticking to other things around the tube.

This base tube and the coating layer are both transparent and do not lose transparency in the case they are mixed. Therefore, by adding pigments, colored multi-layer tubes can be manufactured as usage. Further, making the tubes black-colored by adding carbon, it is possible to produce a multi-layer tube used for ultraviolet ray (light) cross-linked fluid transmission.

For the fluororubber type thermoplastic elastomer(A) of the base tube; as crystalline phase, a segmented polymer of molecular weight 3000 to 400000 selected from (vinylidene fluoride)-(tetrafluoroethylene) copolymer, (ethylene)-(tetrafluoroethylene)-(hexafluoropropylene) ternary copolymer, 3,3,3-trifluoropropylene-1, 2-trifluoromethyl-3,3,3-trifluoropropylene-1 or perfluoroalkylvinylether is used; and as rubber phase, a segmented polymer of molecular weight 30000 to 1200000 selected from (vinylidene fluoride)-(hexafluoropropylene)-(tetrafluoroethylene) ternary copolymer or (perfluoroalkylvinylether)-(tetrafluoroethylene)-(vinylidene fluoride) ternary copolymer is used. The weight ratio of the crystalline phase and the rubber phase is 5∼60:40∼95.

The fluororubber type thermoplastic elastomer in the blend of the coating layer is preferable to be the one described above. Further, as for the (vinylidene fluoride)-(hexafluoropropylene)-(tetrafluoroethylene) ternary copolymer of the blend, it is preferable to have the weight ratio of vinylidene fluoride 10 to 35 mol percent; hexafluoropropylene 10 to 30 mol percent; and tetrafluoroethylene 35 to 70 mol percent. The blend of the coating layer is, in its hardness, preferable to be HDA 70 or more and HDD 80 or less as measured according to JIS K 7215. Particularly, the hardness to be HDA 70 or more and HDD 60 or less is preferable, because the tube has flexibility and possibility of peeling or loosening is low in the severe conditions such as bending etc.

In the second aspect of the multi-layer tube of this invention, adhesiveness between the two layers are high, since the blend of the fluororubber type thermoplastic elastomer with the non-adhesive ethylene-tetrafluoroethylene copolymer (ETFE) or the poly(vinylidene fluoride) (PVDF) is used as the coating layer. Further, since the melting points of the ETFE or the PVDF and the fluororubber type thermoplastic elastomer are near, uniform of the blend material may be easily obtained by mold mixing. The high chemical resistance and non-adhesiveness of the ETFE of the PVDF makes it suitable for the material of the tubes.

In the third aspect of the multi-layer tube of this invention, coating layer easily adhered to the base tube and its adhesiveness is high, since the ETFE or the PVDF of which melting point is near to that of the fluororubber type thermoplastic elastomer is used as the coating layer.

In the case that hardness of the base tube is HDA 40 or more and HDA 70 or less as measured according to JIS K 7215, and that the hardness of coating layer is HDA 70 or more and HDD 80 or less as measured according to JIS K 7215, the adhesion of the two layers can be more strengthened.

In the forth aspect of the multi-layer tube of this invention, since both of the base tube and the coating layer are composed of the blend of the fluororubber type thermoplastic elastomer with the (vinylidene fluoride)-(hexafluoropropylene)-(tetrafluoroethylene) ternary copolymer, higher adhesiveness between the two layers are obtained, and the layers are more difficult to abrupt. Further, the tackiness of the both layers can be suppressed, so that the obtained tube has excellent heat resistance, oil resistance, and chemical resistance against the fluid to be transmitted, and it is difficult for dusts and garbage to stick to the outer surface.

In the base tube made of fluororubber type thermoplastic elastomer, in the case that the side of the coating layer whose surface is not laminated is laminated with a blend of the non-adhesive fluoroplastic or the fluororubber type thermoplastic elastomer composed of the rubber phase and the crystalline phase having a hardness of HDA 40 or more and HDA 70 or less as measured according to JIS K 7215, with the (vinylidene fluoride)-(hexafluoropropylene)-(tetrafluoroethylene) ternary copolymer having a HDA 70 or more and HDD 80 or less as measured according to JIS K 7215, the tackiness of the inside and outside of the tube can be suppressed. Further, these materials are preferable because they have high adhesiveness with the base tube.

In the case that the blend contains 80 weight percent or less of the fluororubber type thermoplastic elastomer, the coating layer having flexibility, pressure-resistance, and low tackiness can be obtained. When the ratio of the fluororubber type thermoplastic elastomer exceeds 80 weight percent, the tackiness becomes high and the pressure resistance deteriorates.

In the case that the rubber phase of the fluororubber type thermoplastic elastomer is made of the (vinylidene fluoride)-(hexafluoropropylene)-(tetrafluoroethylene) ternary copolymer, the nearness of the melting point of the both material makes it easy to mix the material for producing the blend of the coating layer. Therefore, very high adhesiveness between the two layers is obtained.
When the thickness of the coating layer is 0.5∼70 percent that of the base tube, the multi-layer tubes having both of the flexibility and durability can be obtained. When the thickness of the coating layer is less than 0.5 percent that of the base tube, the strength of the coating layer is degraded and the adhesion of the coating layer becomes temper and the layers tend to separate. Further, the pressure resistance deteriorates wholly as a tube.

When the thickness of the coating layer is larger than 70 percent of the thickness of the whole tube, the flexibility is lost wholly as a tube.
Particularly, the thickness of the coating layer is so thin as to be 0.5∼5 percent of the thickness of the whole tube, the flexibility is not reduced while the tackiness is low. Accordingly, this property is preferable for the tube required to be flexible such as those for tube pump use and pinch valve use. Furthermore, the thickness of the coating layer is so thick as to be 50 to 70 percent that of the base tube, large pressure resistance can be expected while keeping flexibility without deterioration of the tackiness. Therefore, this case is preferable for the tubes required to be pressure resistant as well as flexible such as the tubes used for transmitting liquid and gas.

### Brief Description of Drawings

Figure 1 is a cross section of an embodiment of the multi-layer tube of this invention.

Figure 2 is a cross section of an extrusion mold for forming the multi-layer tube shown in Figure 1.

### Best mode for carrying out the invention

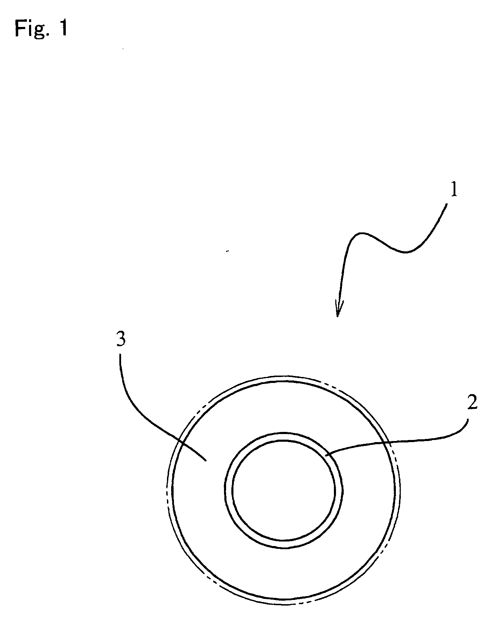

Figure 1 shows an embodiment of the multi-layer tube of this invention. The multi-layer tube 1 comprises the base tube 3 and the coating layer 2.

The blend, which is the material for the coating layer 2 is made by heat kneading and mixing the fluororubber type thermoplastic elastomer and the fluoropalstic. The heating temperature for heat kneading is preferable to be set at either of the higher melting point of the fluororubber type thermoplastic elastomer or the (vinylidene fluoride)-(hexafluoropropylene)-(tetrafluoroethylene) ternary copolymer, and at the temperature causing no thermal decomposition.

The multi-layer tube 1 can be manufactured by an extruder. The fluororubber type thermoplastic elastomer which is the material of the base tube 3 is melted and extruded using the first extruder, the blend which is the material of the coating layer 2 is melted and extruded using the second extruder. They are extruded into the common mold, and in the converging part, the material of the base tube 3 and the coating layer 2 is adhered and pushed out to the outlet. It is preferable to be so manufactured as to cool the molded tube by water-cooling or air-cooling and to take off the tube by a take-off equipment.

Because the fluororubber type thermoplastic elastomer and the (vinylidene fluoride)-(hexafluoropropylene)-(tetrafluoroethylene) ternary copolymer have a property to be cross-linked by radiation rays, it is preferable to cross-link after mold forming the multi-layer tube 1 by radiation rays. This processing will improves the mechanical property. The amount of dose for the radiation is preferable to be in the range from 5 ∼ 500 kGy. The amount less than 5 kGy of that reduces the effectiveness of the cross-linking, and the amount more than 500 kGy of that may cause the material deterioration.

The blend of the fluororubber type thermoplastic elastomer with a (vinylidene fluoride)-(hexafluoropropylene)-(tetrafluoroethylene) ternary copolymer can be laminated on the base tube like shown by the imaginary line in Figure 1. In this case, sticking of the tube to each other or to peripheral devices of the tube can be avoided and the contamination of the tube is prevented.

### Examples

### [Example 1]

### [Forming of multi-layer tube]

The multi-layer tube shown in Figure 1 was used as the embodiment 1. As the fluororubber type thermoplastic elastomer(A) of the base tube 3, DAI-EL thermoplastic T-530 was used, and as the (vinylidene fluoride)-(hexafluoropropylene)-(tetrafluoroethylene) ternary copolymer(B) of the blend of the coating layer 2, THV-500G was used. The material of the coating layer 2 was formed by mixting the fluororubber type thermoplastic elastomer (A) and the (vinylidene fluoride)-(hexafluoropropylene)-(tetrafluoroethylene) ternary copolymer(B) in the weight ration of one to one.

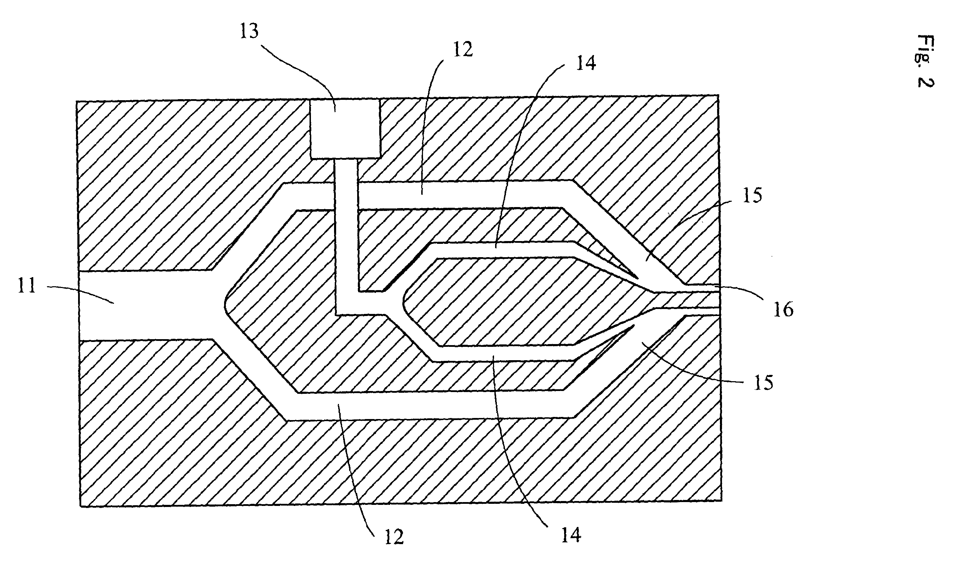

Figure 2 shows the cross section of the extruding mold to form the multi-layer tube 1 of the Figure 1. An extruder whose cylinder diameter: 40mm, L/D:25 is connected to the base tube inlet 11 of the extrusion mold. The fluororubber type thermoplastic elastomer(A) melted at 260 °C is extruded into the base tube inlet 11 and passes through the base tube flow path 12. An extruder whose cylinder diameter: 30mm, L/D:25 is connected to the coating layer inlet 13 of the extruding mold. The blend of the fluororubber type thermoplastic elastomer(A) and the (vinylidene fluoride)-(hexafluoropropylene)-(tetrafluoroethylene) ternary copolymer(B) melted at 260°C is extruded into the coating layer inlet 13 and passes through the coating layer flow path 14. In the converging part 15, the materials of the base tube and the coating layer are adhered and the multi-layer tube 1 is extruded from the mold outlet 16, of which base tube 3 is the fluororubber type thermoplastic elastomer(A), and of which coating layer 2 is (vinylidene fluoride)-(hexafluoropropylene)-(tetrafluoroethylene) ternary copolymer(B). The thickness of the coating layer 2 and the base tube 3 was set to be 0.2mm, 0.8mm respectively.

### [Comparative Example 1]

The multi-layer tube shown in Figure 1 was used as the example 1 for comparison. As the fluororubber type thermoplastic elastomer (A) of the base tube 3, DAIKIN INDUSTRIES,Ltd. DAI-EL thermoplastic T-530(Hardness HDA67) was used, and as the fluoropalstic(B) of ternary copolymer of the coating layer 2, THV-500G (Hardness HDA 92 to 93) manufactured by SUMITOMO 3M limited was used. The forming method was that described above.

### [Physical Property Evaluation]

The tube described above was used to measure the pressure resistance and the minimum radius of bending. The results are shown in Table 1. The pressure resistance expresses a pressure at which the deformation of the tube begins when one end of the tube is closed while pressuring from another end. The bending radius expresses a radius at which the collapsing occurs in the front edge of the bended part when the tube is bended into U-shape. With or without wrinkles is checked by the observation of wrinkles in the inner surface of the tube when the tube was bent at the bending radius R. "○" shows that no wrinkle was found, and "×" shows that any wrinkle was found.

**[Table 1]**

| | Pressure Resistance (MPa) | Bending Radius(mm) | Wrinkles in the bended part |
|---|---|---|---|
| Example 1 | 0.8 | 7.5 | ○ |
| Comparative Example 1 | 0.6 | 9.0 | × |
| Single layer tube (A) only | 0.2 | 6.0 | ○ |

As shown in Table 1, in the embodiment 1, under the most severe condition where the bending radius is the smallest, no wrinkle was found. Further, the embodiment 1 showed the best results also in the pressure resistance.

### 〈Test Method〉

A 0.5mm thick sheet of fluororubber type thermoplastic elastomer having the hardness of JIS A67 and a 0.5mm thick synthetic resin sheet were fabricated. The two sheets are superimposed and adhered by pressing under the temperature raised to the melting point. As the fluororubber type thermoplastic elastomer, DAI-EL thermoplastic T-530 (Hardness HDA 67) was used as above. As the material of the synthetic resin sheets, the followings were used. After these two layer sheets were cooled, the peel tests were carried out to measure the adhesiveness of the fluororubber type thermoplastic elastomer and various synthetic resins. The results are shown below.

### [Example 2]

The ethylene-tetrafluoroethylene copolymer (ETFE) having the hardness of JIS D55 was used for the synthetic resin sheet.

### [Example 3]

The poly(vinylidene fluoride) (PVDF) having the hardness JIS D75 was used for the synthetic resin sheet.

### [Example 4]

The blend having the hardness of JIS A83 formed by blending 50 weight% of the fluororubber type thermoplastic elastomer having the hardness of JIS A67 and the (vinylidene fluoride)-(hexafluoropropylene)-(tetrafluoroethylene) ternary copolymer having the hardness of JIS A91, was used for the synthetic resin sheet.

### [Example 5]

The blend having the hardness of JIS A86 formed by blending 50 weight% of the fluororubber type thermoplastic elastomer having the hardness of JIS A67 and the ETFE having the hardness of JIS D55, was used for the synthetic resin sheet.

### [Example 6]

The blend having the hardness of JIS D55 formed by blending 50 weight% of the fluororubber type thermoplastic elastomer having the hardness of JIS A67 and the PVDF having the hardness of JIS D75, was used for the synthetic resin sheet.

### [Comparative Example 2]

The (vinylidene fluoride)-(hexafluoropropylene)-(tetrafluoroethylene) ternary copolymer having the hardness of JIS A91(JIS D50) was used for the synthetic resin sheet.

### [Comparative Example 3]

The polyethylene (PE) having the hardness of JIS D55 was used for the synthetic resin sheet.

### [Comparative Example 4]

The blend having the hardness of JIS A85 formed by blending 50 weight% of the fluororubber type thermoplastic elastomer having the hardness of JIS A67 and the polyethylene having the hardness of JIS D55, was used for the synthetic resin sheet.

**[Table 2]**

| | Results |
|---|---|
| Example 2 | Breakdown in the material (The adhesion force exceeded the material strength.) |
| Example 3 | Peeling of the surface (0.2N/mm) |
| Example 4 | Breakdown in the material (The adhesion force exceeded the material strength.) |
| Example 5 | Breakdown in the material (The adhesion force exceeded the material strength.) |
| Example 6 | Peeling of the surface (0.2N/mm) |
| Comparative Example 2 | Breakdown in the material (The adhesion force exceeded the material strength.) |
| Comparative Example 3 | Peeling of the surface (Less than 0.1N/mm) |
| Comparative Example 4 | Peeling of the surface (Less than 0.1N/mm) |

As shown in Table 2, The synthetic resin sheets containing the (vinylidene fluoride)-(hexafluoropropylene)-(tetrafluoroethylene) ternary copolymer, ethylene-tetrafluoroethylene copolymer (ETFE) or the poly(vinylidene fluoride) (PVDF) showed good adhesiveness to the fluororubber type thermoplastic elastomer.

## Claims

1. A multi-layer tube, comprising;
a base tube made of a fluororubber type thermoplastic elastomer composed of a rubber phase and a crystalline phase, having a hardness of HDA 40 or more and HDA 70 or less as measured according to JIS K 7215;and
a coating layer laminated on an inner surface or an outer surface of the base tube,
wherein the coating layer is a blend of the above fluororubber type thermoplastic elastomer with a (vinylidene fluoride)-(hexafluoropropylene)-(tetrafluoroethylene) ternary copolymer having a hardness of HDA 70 or more and HDD 80 or less as measured according to JIS K 7215.

2. A multi-layer tube, comprising;
a base tube made of a fluororubber type thermoplastic elastomer composed of a rubber phase and a crystalline phase; and
a coating layer laminated on an inner surface or an outer surface of the base tube, wherein the coating layer is a blend of a fluororubber type thermoplastic elastomer with an ethylene-tetrafluoroethylene copolymer (ETFE) or a poly(vinylidene fluoride) (PVDF).

3. A multi-layer tube, comprising;
a base tube made of a fluororubber type thermoplastic elastomer composed of a rubber phase and a crystalline phase; and
a coating layer laminated on an inner surface or an outer surface of the base tube, wherein the coating layer is made of an ethylene-tetrafluoroethylene copolymer (ETFE) or a poly(vinylidene fluoride) (PVDF).

4. A multi-layer tube according to claim 2 or 3,
wherein the base tube has a hardness of HDA 40 or more and HDA 70 or less as measured according to JIS K 7215 and the coating layer has a hardness of HDA 70 or more and HDD 80 or less as measured according to JIS K 7215.

5. A multi-layer tube comprising;
a base tube; and
a coating layer laminated on an inner surface of the base tube,
wherein the both materials of the base tube and the coating layer are made of a blend of a fluororubber type thermoplastic elastomer(A) composed of copolymer of a rubber phase and a crystalline phase having a hardness of HDA 40 or more and HDA 70 or less as measured according to JIS K 7215, with a non-adhesive fluoroplastic (B) having a hardness of HDA 70 or more and HDD 80 or less as dmeasured according to JIS K 7215, and the weight percent of a ternary copolymer(B) of the base tube is less than that of the coating layer.

6. A multi-layer tube, according to any of claim 1 ∼ 3,
wherein a non-adhesive fluoroplastic is laminated on a side whose surface is not laminated with the coating layer of the base tube.

7. A multi-layer tube, according to any of claim 1 ∼ 3,
wherein a blend of the fluororubber type thermoplastic elastomer composed of a rubber phase and a crystallin phase having a hardness of HDA 40 or more and HDA 70 or less as measured according to JIS K 7215, with a (vinylidene fluoride)-(hexafluoropropylene)-(tetrafluoroethylene) ternary copolymer having a hardness of HDA 70 or more, HDD 80 or less as measured according to JIS K 7215 is laminated on the side whose surface is not laminated with the coating layer of the base tube.

8. A multi-layer tube, according to claim 1, 2 or 5,
wherein the blend contains less than 80 weight percent of the fluororubber type thermoplastic elastomer.

9. A multi-layer tube, according to any of claim 1∼8,
wherein the rubber phase is composed of the (vinylidene fluoride)-(hexafluoropropylene)-(tetrafluoroethylene) ternary copolymer.

10. A multi-layer tube, according to any of claim 1∼9,
wherein a thickness of the coating layer is 0.5∼70% of the thickness of the base tube.
